# EUROPÄISCHE PATENTSCHRIFT

(11) **EP 3 930 944 B1**
(45) Veröffentlichungstag und Bekanntmachung des Hinweises auf die Patenterteilung: **07.06.2023**
(21) Anmeldenummer: 20706083.1
(22) Anmeldetag: 21.02.2020
(51) Int. Cl.: B22F 10/28, B22F 12/00, B22F 12/30, B22F 12/88, B33Y 10/00, B33Y 30/00, B29C 64/20, B29C 64/153, B29C 64/379, B22F 10/32, B22F 12/33

(54) **VERFAHREN UND VORRICHTUNG ZUR HERSTELLUNG VON DREIDIMENSIONALEN BAUTEILEN DURCH SELEKTIVES VERFESTIGEN**
METHOD AND DEVICE FOR PRODUCING THREE-DIMENSIONAL COMPONENTS BY SELECTIVE SOLIDIFICATION
PROCÉDÉ ET DISPOSITIF DE FABRICATION DE COMPOSANTS TRIDIMENSIONNELS PAR CONSOLIDATION SÉLECTIVE

(30) Priorität: 26.02.2019 DE 102019104781
(43) Veröffentlichungstag der Anmeldung: 05.01.2022
(73) Patentinhaber: Trumpf Laser- und Systemtechnik GmbH, 71254 Ditzingen (DE)
(72) Erfinder: MARGOLF, Andreas, 70825 Korntal-Muenchingen (DE)
(74) Vertreter: Trumpf Patentabteilung
(86) Internationale Anmeldenummer: PCT/EP2020/054687
(87) Internationale Veröffentlichungsnummer: WO 2020/173839

(56) Entgegenhaltungen:
- EP-A1- 2 289 652
- EP-A1- 2 289 652
- EP-A2- 2 507 037
- DE-A1-102011 075 748
- US-A1- 2016 311 027
- US-A1- 2018 222 117

## Beschreibung

Die Erfindung betrifft ein Verfahren, eine Vorrichtung zur Herstellung von dreidimensionalen Bauteilen durch selektives Verfestigen aus schichtweise aufgebrachtem Aufbaumaterial.

Aus der DE 10 2011 075 748 A1 ist eine solche Vorrichtung zur Herstellung von dreidimensionalen Bauteilen bekannt. Diese Vorrichtung umfasst eine Prozesskammer innerhalb der einer Arbeitsebene der Prozesskammer zugeordnet ein Bauzylinder vorgesehen ist. In dem Bauzylinder können mehrere Substratplatten verfahrbar aufgenommen werden. Diese Vorrichtung umfasst des Weiteren eine Auftragsvorrichtung, welche entlang der Arbeitsebene verfahrbar ist und Aufbaumaterial zum selektiven Verfestigen mittels eines Strahls auf die Substratplatte im Bauzylinder aufbringt. Zusätzlich zur Auftragsvorrichtung ist eine Pulverabsaugeinrichtung mit einer Absaughaube vorgesehen, um nicht verfestigtes Aufbaumaterial nach der Fertigstellung des dreidimensionalen Bauteiles abzusaugen. Darauffolgend wird die oberste Substratplatte zur Arbeitsebene derart verfahren, dass eine Unterseite der obersten Substratplatte bündig zur Arbeitsebene liegt. Die oberste Substratplatte mit dem fertig gestellten Bauteil wird mit dieser Pulverabsaugeinrichtung in eine Zwischenlagerungsfläche oder alternativ in eine Schleuse hineingeschoben, die dem Prozessraum benachbart ist.

Aus EP2289652A1 ist es bekannt, dass eine Substratplatte bereitgestellt wird, welche in ein erstes Substratplattensegment und zumindest ein weiteres Substratplattensegment unterteilt ist, die lösbar miteinander oder mit einem Grundträger verbunden sind, und ein erstes Produkt auf dem ersten Substratplattensegment hergestellt wird durch aufeinanderfolgendes Auftragen von Materialschichten auf das erste Substratplattensegment und selektives Aushärten von vorbestimmten Bereichen jeder aufgetragenen Materialschicht nach deren Auftrag, und zumindest ein weiteres Produkt auf dem zumindest einen weiteren Substratplattensegment hergestellt wird durch aufeinanderfolgendes Auftragen von Materialschichten auf das weitere Substratplattensegment und selektives Aushärten von vorbestimmten Bereichen jeder aufgetragenen Materialschicht nach deren Auftrag. Zusätzlich ist es vorgesehen, dass fertig ausgehärtete Produkte entnommen werden können.

Der Erfindung liegt die Aufgabe zugrunde, ein kostengünstiges Verfahren sowie eine kostengünstige Vorrichtung zur Herstellung von dreidimensionalen Bauteilen mit einer hohen Auslastung vorzuschlagen.

Diese Aufgabe wird durch ein Verfahren zur Herstellung von dreidimensionalen Bauteilen durch selektives Verfestigen aus schichtweise aufgebrachten Aufbaumaterialien gelöst, bei dem die oberste, der im Bauzylinder befindlichen Substratplatte mit dem zumindest einen sich darauf befindenden, fertig gestellten Bauteil, durch die Auftragsvorrichtung von dem Bauzylinder in eine benachbarte Auffangkammer oder in ein Magazin übergeführt wird. Durch die Auftragsvorrichtung wird nicht verfestigtes Aufbaumaterial in den Bauzylinder eingetragen, um darauffolgend die aufgebrachte Schicht des Aufbaumaterials durch zumindest einen Strahl einer Strahlquelle zu verfestigen. Diese Auftragsvorrichtung wird gleichzeitig auch dafür verwendet, um die oberste Substratplatte von mehrerer im Bauzylinder angeordneter Substratplatten in die benachbarte Auffangkammer oder in das Magazin überzuführen. Darauffolgend können ohne Stillstandszeit der Vorrichtung auf der weiteren sich im Bauzylinder befindlichen Substratplatte weitere dreidimensionale Bauteile hergestellt werden. Durch dieses Verfahren ist ermöglicht, dass mehrere Substratplatten aufeinanderfolgend zum Herstellen von dreidimensionalen Bauteilen genutzt werden können, wobei durch den Einsatz der Auftragsvorrichtung zum Abtransport von Substratplatten mit fertiggestellten Bauteilen kurze Zykluszeiten möglich werden.

Bevorzugt ist vorgesehen, dass die Verfahrbewegung der Auftragsvorrichtung mit einer Kraft angetrieben wird, welche größer als eine Haltekraft einer lösbaren Halteeinrichtung zwischen zwei benachbarten Substratplatten ist. Die zueinander benachbarten, bzw. übereinander gestapelten Substratplatten sind mittels der lösbaren Halteeinrichtung zueinander vorfixiert, so dass eine relative Verdrehung und eine Verschiebebewegung mit einer geringen Kraft zueinander verhindert wird. Die Verfahrbewegung der Auftragsvorrichtung wird jedoch mit einer solchen Kraft angesteuert, dass die Halteeinrichtung zum Verschieben der obersten Substratplatte in die Auffangkammer oder in das Magazin nach dem Angreifen der Auftragsvorrichtung an der obersten Substratplatte von der darunterliegenden Substratplatte gelöst wird. Bevorzugt ist an der Auftragsvorrichtung zumindest ein Führungselement vorgesehen, durch welches die Substratplatte während einer Verfahrbewegung von dem Bauzylinder in die Auffangkammer oder in das Magazin geführt wird.

Durch dieses zumindest eine Führungselement kann die Prozesssicherheit erhöht werden. Ein definiertes Überführen der Substratplatte in die Auffangkammer oder ein Magazin kann sichergestellt werden.

Des Weiteren ist bevorzugt vorgesehen, dass vor dem Überführen der Substratplatte mit dem zumindest einen fertig gestellten dreidimensionalen Bauteil in ein Magazin Überfahrelemente in die Aufbaukammer positioniert werden. Dies ermöglicht, dass ein bisheriger konstruktiver Aufbau der Prozesskammer beibehalten werden kann und ein sicheres Überfahren der Auffangkammer zum Überführen der Substratplatte in das außerhalb der Auffangkammer liegende Magazin ermöglicht wird.

Die der Erfindung zugrundeliegende Aufgabe wird des Weiteren durch eine Vorrichtung zur Herstellung von dreidimensionalen Bauteilen durch selektives Verfestigen aus schichtweise aufgebrachtem Aufbaumaterial gelöst, bei welcher die Auftragsvorrichtung zu einem Substratplattentransport ansteuerbar ist, durch welche die oberste aus dem Bauzylinder herausgeführte Substratplatte in der Auffangkammer oder einem Magazin verschiebbar ist.

Während dem Substratplattentransport von dem Bauzylinder in die Auffangkammer oder das Magazin ist die Ausgabe von Aufbaumaterial gestoppt. Die Verfahrbewegung der Auftragsvorrichtung entlang der Arbeitsebene dient dem Abführen der obersten Substratplatte mit darauf hergestellten Bauteilen, so dass die darauffolgende Substratplatte in dem Bauzylinder zur Herstellung von dreidimensionalen Bauteilen durch selektives Verfestigen aus schichtweise aufgebrachtem Aufbaumaterial im Bauzylinder bereitgestellt ist. Dadurch kann eine Reduktion der Teilekosten zum Aufbau der Vorrichtung erzielt werden, zudem kann die Vorrichtung ohne Maschinenbediener und ohne Zwischenstopp vor dem nächsten Herstellungsschritt betrieben werden.

Eine bevorzugte Ausgestaltung des Verfahrens sieht vor, dass auf der Substratplatte, auf welcher das oder die Bauteile aufgebaut werden, zusätzlich zumindest ein Stützelement aufgebaut wird, welches oder welche die Höhe des höchsten Bauteils aufweist oder höher aufgebaut werden, so dass die in die Auffangkammer übergeführten und gestapelten Substratplatten durch die Stützelemente übereinandergestapelt werden können. Dies ermöglicht einen Schutz der Bauteile vor Beschädigungen durch die in die Auffangkammer übergeführte Substratplatte beim Herunterfallen auf die zuletzt in die Auffangkammer eingebrachte Substratplatte mit Bauteilen.

Vorteilhafterweise ist an der Auftragsvorrichtung zumindest ein Führungselement vorgesehen, durch welches die Substratplatte während einer Verschiebebewegung entlang einer Arbeitsebene geführt ist. Dieses Führungselement ist vorzugsweise an einer Seitenwand der Auftragsvorrichtung vorgesehen, welches bei einer Verfahrbewegung der Auftragsvorrichtung vorauseilt und an der Substratplatte angreift. Das zusätzliche Anbringen des zumindest einen Führungselementes ist eine kostengünstige Maßnahme im Vergleich zur Anordnung einer separaten Substratplattentransporteinrichtung.

Das an der Auftragsvorrichtung angeordnete Führungselement besteht bevorzugt aus zwei zueinander beabstandeten Vorsprüngen oder aus einem Anschlag mit einer konkaven Vertiefung. Das Führungselement ist derart ausgebildet, dass die Substratplatte während der Verfahrbewegung der Auftragsvorrichtung entlang deren Verfahrachse verfahren wird.

Bevorzugt ist das zumindest eine Führungselement aus einem elastischen Material, insbesondere aus Kunststoff hergestellt. Dadurch kann gleichzeitig eine Dämpfung beim Angreifen des Führungselementes an der Substratplatte erfolgen.

Bevorzugt ist zwischen zwei benachbarten Substratplatten, die in dem Bauzylinder bevorratet sind, zumindest eine lösbare Haltevorrichtung vorgesehen. Diese lösbare Haltevorrichtung ermöglicht eine Sicherung gegen Verdrehen und / oder Verschieben der obersten Substratplatte zur darunterliegenden Substratplatte. Dadurch kann eine hohe Maßhaltigkeit beim Aufbau der dreidimensionalen Bauteile erzielt werden. Die Haltevorrichtung ist bevorzugt mit einer Lösekraft eingestellt, dass beim Angreifen der Auftragsvorrichtung an der obersten und aus dem Bauzylinder herausgeführten Substratplatte eine Verschiebebewegung gegenüber der darunterliegenden Substratplatte entlang der Arbeitsebene ermöglicht ist.

Die restlichen Substratplatten, die sich in dem Bauzylinder befinden, können zusätzlich zur lösbaren Haltevorrichtung durch Aufbaumaterial gegen Verschieben gesichert sein, welches sich im Bauzylinder zwischen den Substratplatten und der Mantelfläche des Bauzylinders befindet.

Vorteilhafterweise ist die lösbare Haltevorrichtung durch ein Nullpunkt-Bandsystem ausgebildet. Alternativ können auch mehrere Vorsprünge an der einen Substratplatte vorgesehen sein, die in korrespondierende Vertiefungen der gegenüberliegenden Substratplatte eingreifen. In diesem Fall können beispielsweise Kugeln, Stifte, oder ausgeprägte Geometrien in korrespondierende Vertiefungen eingreifen.

Bevorzugt ist vorgesehen, dass einer in der Arbeitsebene der Prozesskammer liegenden Öffnung der Auffangkammer eine Einführvorrichtung zugeordnet ist. Diese Einführvorrichtung weist den Vorteil auf, dass beim Überführen der Substratplatte mit dem zumindest einen fertiggestellten Bauteil durch die Auftragsvorrichtung eine horizontale Verschiebebewegung entlang der Arbeitsebene vollständig über die Öffnung der Auffangkammer erfolgen kann, so dass darauffolgend die Substratplatte in einer horizontalen Ausrichtung nach unten in die Auffangkammer fallen kann. Durch diese Einführvorrichtung wird ein vorzeitiges Abkippen der Substratplatte in die Auffangkammer und eine ggfs. darauffolgende Beschädigung der Bauteile verhindert.

Die Einführvorrichtung weist bevorzugt Führungsarme auf, welche sich teilweise entlang der Öffnung der Auffangkammer erstrecken, wobei jeweils ein freies Ende der Führungsarme entgegen der Verfahrrichtung ausgerichtet ist und die Substratplatte zwischen die Führungsarme verfahrbar ist, um diese zeitweise oberhalb der Auffangkammer aufzunehmen. Diese Führungsarme weisen einen Einführbereich vor der Öffnung der Auffangkammer auf, an den sich Auflageflächen an den Führungsarmen anschließen. Dadurch kann eine Stützwirkung für die Substratplatte beim Überführen der Substratplatte in eine Position oberhalb der Öffnung der Auffangkammer ermöglichen.

Des Weiteren ist bevorzugt vorgesehen, dass die Führungsarme der Einführvorrichtung entgegengesetzt zur Einführöffnung Spreizabschnitte aufweisen. Dadurch wird ermöglicht, dass beim Positionieren der Substratplatte oberhalb der Öffnung der Auffangkammer die Auflageflächen der Führungsarme nach außen gespreizt werden, so dass die Substratplatte unmittelbar nach unten in die Auffangkammer fallen kann.

Zur Reduzierung der Fallgeschwindigkeit der Substratplatte in die Auffangkammer ist bevorzugt eine Aufpralldämpfungsvorrichtung vorgesehen. Diese Aufpralldämpfungsvorrichtung kann in die Auffangkammer einsetzbar oder an der Mantelfläche der Auffangkammer vorgesehen sein.

Diese Aufpralldämpfungsvorrichtung kann entlang der Höhe der Auffangkammer mehrere Dämpfungselemente aufweisen, durch welche die Fallbewegung in die Auffangkammer gebremst ist. Beispielsweise können entlang einer in vertikaler Richtung sich erstreckende Leisten jeweils mehrere Dämpfungslaschen ausgebildet sein, welche in Richtung auf den Innenraum der Auffangkammer ausgerichtet sein. Vorzugsweise sind mehrere solche Leisten mit Dämpfungslaschen über den Umfang verteilt in der Auffangkammer für eine Dämpfung der Fallgeschwindigkeit der Substratplatte vorgesehen.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Seitenansicht einer Vorrichtung zur Herstellung von dreidimensionalen Bauteilen,
- Figur 2: eine schematische Ansicht eines ersten Schritts zum Abtransport einer Substratplatte mit fertiggestellten Bauteilen,
- Figur 3: eine schematische Ansicht eines weiteren Arbeitsschrittes zum Abtransport der Substratplatte mit fertig gestellten Bauteilen,
- Figur 4: eine schematische Schnittansicht von zwei übereinander gestapelten Substratplatten mit einer lösbaren Haltevorrichtung.
- Figur 5: eine schematische Schnittansicht eines Bauzylinders mit mehreren Substratplatten während der Herstellung von zumindest einem Bauteil,
- Figur 6: eine perspektivische Ansicht einer Substratplatte mit zumindest einem Bauteil und aufgebauten Stützelementen,
- Figur 7: eine perspektivische Ansicht der Auftragsvorrichtung mit einem Führungselement,
- Figur 8: eine perspektivische Ansicht der Auftragsvorrichtung mit einem alternativen Führungselement zu Figur 7,
- Figur 9: eine perspektivische Ansicht einer Einführvorrichtung zum Überführen der Substratplatte von einer Arbeitsebene in eine Auffangkammer, und
- Figur 10: eine perspektivische Ansicht eines Aufpralldämpfers für Substratplatten.

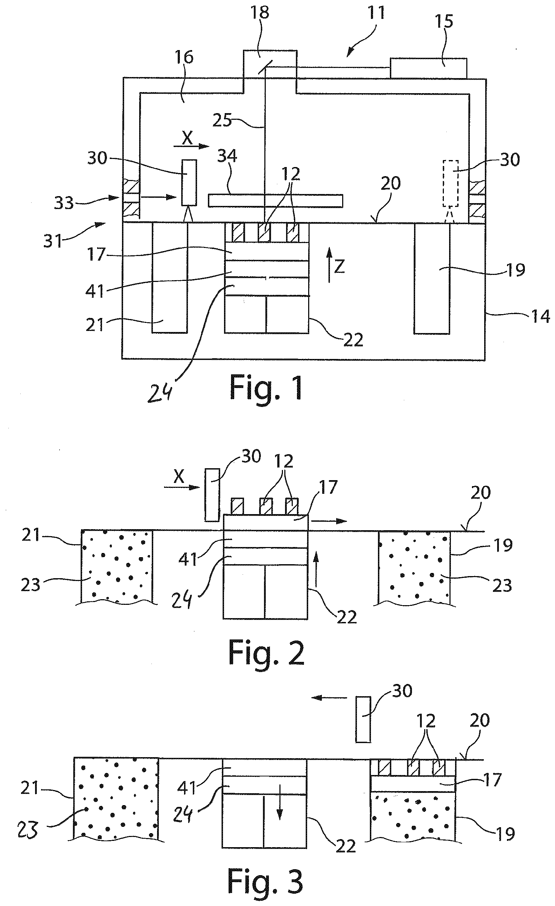

In Figur 1 ist eine schematische Seitenansicht einer Vorrichtung 11 in den Bauteilen 12 durch selektives Verfestigen eines schichtweise aufgebrachten Aufbaumaterials dargestellt. Diese Vorrichtungen 11 werden auch als 3D-Drucksysteme, selektive Lasersintermaschinen, selektive Laserschmelzmaschinen, oder dergleichen bezeichnet. Diese Vorrichtung 11 umfasst ein Gehäuse 14, indem eine Prozesskammer 16 vorgesehen ist. Diese Prozesskammer 16 ist nach außen hin geschlossen und kann beispielweise über eine nicht näher dargestellte Tür oder über einen Sicherheitsverschluss zugänglich sein. In der Prozesskammer 16 ist ein Bauzylinder 22 einer Arbeitsebene 20 zugeordnet. In diesem Bauzylinder 22 sind mehrere übereinander gestapelte Substratplatten 17, 41 vorgesehen. Diese Substratplatten 17, 41 können in Z-Richtung relativ zur Arbeitsebene 20 verfahren werden.

Benachbart zum Bauzylinder 22 sind beispielsweise ein oder zwei Auffangkammern 19 vorgesehen, in welchen nicht benötigtes oder nicht verfestigtes Aufbaumaterial gesammelt wird. Alternativ kann vorgesehen sein, dass auf einer Seite des Bauzylinders 22 ein Vorratsbehälter 21 zur Aufnahme und Ausgabe eines Aufbaumaterials 23 vorgesehen ist. Das Aufbaumaterial wird durch eine Auftragsvorrichtung 30 von dem Vorratsbehälter 21 dem Bauzylinder 22 zugeführt. Die Auftragsvorrichtung 30 weist des Weiteren eine Bürstenleiste, einen Abstreifer oder dergleichen auf, um nicht benötigtes oder nicht verfestigtes Aufbaumaterial in die Auffangkammer 19 überzuführen. Alternativ kann vorgesehen sein, dass beidseitig zum Bauzylinder 22 Aufbaukammern 19 vorgesehen sind und das Aufbaumaterial 23 unmittelbar durch die Auftragsvorrichtung 30 von oben auf die Substratplatte 17 ausgegeben wird.

Das Aufbaumaterial besteht bevorzugt aus einem Metall- oder einem Keramikpulver. Auch andere für das Laserschmelzen oder das Lasersintern geeignete Werkstoffe können eingesetzt werden.

Oberhalb dem Bauzylinder 22 ist an dem Gehäuse 14 eine Strahlquelle 15 vorgesehen, wie beispielsweise eine Laserquelle. Diese Strahlquelle 15 gibt einen Strahl 25 aus, der über zumindest ein Strahlführungselement 18 auf die Arbeitsebene 20, insbesondere auf die Substratplatte 17 umgelenkt wird.

Das Strahlführungselement 18 kann zumindest einen ansteuerbaren Spiegel, insbesondere in Form eines Scanners umfassen. Zusätzlich können auch weitere optische Elemente zur Fokussierung des Strahles vorgesehen sein.

Die Prozesskammer 16 ist hermetisch abgeriegelt. Diese wird für die Herstellung des dreidimensionalen Bauteils 12 mit Schutzgas oder einem Inertgas gefüllt, um beim Aufschmelzen des Aufbaumaterials eine Oxidation zu vermeiden.

Zum Zu- und Abführen des Schutzgases ist ein Schutzgassystem 31 vorgesehen. Dieses weist zumindest eine Einströmdüse 33 und eine Ausströmdüse 34 im Gehäuse 14 auf.

Nach dem Herstellen des dreidimensionalen Bauteils 12 wird die Auftragsvorrichtung 30 in eine Position benachbart zum Bauzylinder 22 positioniert. Darauffolgend wird die oberste Substratplatte 17 in dem Bauzylinder 22 in Z-Richtung verfahren, so dass eine Unterseite der obersten Substratplatte 17 in der Arbeitsebene 20 liegt.

In Figur 2 ist eine solche Position der obersten Substratplatte 17 zur Arbeitsebene 20 vor dem Beginn eines Abtransports dargestellt. Ausgehend hiervon wird eine Verfahrbewegung der Auftragsvorrichtung 30 angesteuert, welche in X-Richtung verfahren wird. Eine Stirnseite der Auftragsvorrichtung 30 greift an der Substratplatte 17 an. Durch die weitere Ansteuerung der Verfahrbewegung der Auftragsvorrichtung 30 in X-Richtung wird die Haltevorrichtung 42 zwischen der obersten Substratplatte 17 und der darunterliegenden Substratplatte 41 gelöst. Eine Verfahrbewegung der Substratplatte 17 in X-Richtung wird eingeleitet. Die Substratplatte 17 wird durch die Auftragsvorrichtung 30 in die Auffangkammern 19 verfahren.

Die Figur 3 zeigt einen weiteren Arbeitsschritt für den Abtransport der obersten Substratplatte 17 mit zunächst einem darauf sich befindenden, fertiggestellten Bauteil 12. Dabei ist die Auftragsvorrichtung 30 derart verfahren, dass die Substratplatte 17 mit dem zumindest einen fertiggestellten Bauteil 12 in die Auffangkammern 19 übergeführt ist. Darauffolgend wird die Auftragsvorrichtung 30 in entgegengesetzter Richtung verfahren. Die zur Arbeitsebene 20 weisende Substratplatte 41 ist für den nächsten Herstellungsprozess von zumindest einem dreidimensionalen Bauteil 12 bereitgestellt. Darauffolgend wird die Auftragsvorrichtung 30 in X-Richtung zum Aufbringen von Aufbaumaterial auf die Substratplatte 41 verfahren. Anschließend kann die Auftragsvorrichtung 30 das überschüssige Aufbaumaterial, das auf der Substratplatte 41 zurückbleibt, in die Auffangkammern 19 schieben. Somit kann ohne Stillstandszeit der Vorrichtung 11 ein aufeinanderfolgendes Herstellen von dreidimensionalen Bauteilen 12 auf den Substratplatten 17, 41 erfolgen.

Alternativ zu dem Überführen der Substratplatte 17 mit den darauf fertig gestellten Bauteilen 12 in die Auffangkammern 19 kann vorgesehen sein, dass diese Substratplatte 17 in ein nicht näher dargestelltes Magazin übergeführt wird. Ein solches Magazin kann als ein Schiebemagazin, Drehmagazin oder ein Paternoster ausgebildet sein. Ein solches Magazin ist bevorzugt in der Verfahrrichtung, also X-Richtung der Auftragseinrichtung 30 positioniert. Dieses Magazin kann in X-Richtung gesehen, benachbart zur Auffangkammer 19, insbesondere rechts von der Auffangkammer 19 vorgesehen sein. Zum Überfahren der Auffangkammern 19 können bevorzugt Überfahrelemente in die Auffangkammern 19 eingesetzt werden, so dass die Substratplatte 17, 41 in das benachbarte Magazin überführbar ist. Solche Überfahrelemente können als Rundstäbe ausgebildet sein.

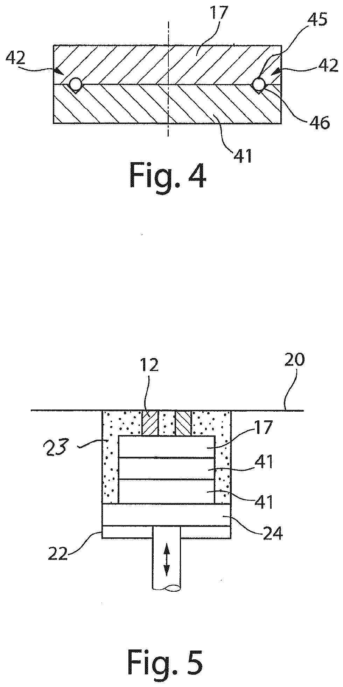

In Figur 4 ist eine schematische Schnittansicht von zwei übereinanderliegenden Substratplatten 17, 41 dargestellt. Diese sind durch eine lösbare Haltevorrichtung 42 miteinander verbunden. Diese lösbare Haltevorrichtung 42 dient dazu, die beiden Substratplatten 17, 41 gegen Verdrehen und / oder eine Verschiebebewegung mit geringen Kräften zu sichern. Die unterste der gestapelten Substratplatten 17, 41 im Bauzylinder ist analog zu einer lösbaren Haltevorrichtung 42 an einer Aufbauplattform fixiert, an welcher bevorzugt ein Hubzylinder zur Auf- und Abbewegung der Aufbauplattform in den Bauzylinder 22, angesteuert ist.

Die lösbare Haltevorrichtung 42 kann gemäß einer ersten Ausführungsform als Vorsprung 45, insbesondere aus Kugeln oder Stiften ausgebildet sein, die gegenüber einer Unterseite der Substratplatte 17 hervorstehen und in eine korrespondierende Vertiefung 46 an der gegenüberliegenden Substratplatte 41 eingreifen. Auch eine Vertauschung der Anordnung ist möglich. Durch diese Anordnung kann eine relative Verdrehung der Substratplatten 17, 41 zueinander verhindert sein. Zudem kann ein einfaches Verschieben der Substratplatten 17, 41 gegeneinander verhindert sein. In Abhängigkeit des Ineinandergreifens der Elemente der lösbaren Haltevorrichtung 42 kann eine Lösekraft eingestellt werden. Auch kann dies in Abhängigkeit der jeweiligen Geometrie des Vorsprungs 45 und / oder der Vertiefung 46 sein.

Alternativ können auch Federkugelstifte, bzw. federgelagerte Kugeln vorgesehen sein. Auch kann die lösbare Haltevorrichtung 42 als ein Nullpunkt-Bandsystem ausgebildet sein.

In Figur 5 ist eine schematische Schnittansicht des Bauzylinders 22 mit mehreren auf einer Aufbauplattform 24 gestapelten Substratplatten 17, 41 vorgesehen. Die Aufbauplattform 24 ist über einen nicht näher dargestellten Arbeitszylinder innerhalb des Bauzylinders 22 auf und ab beweg bar.

Die Substratplatten 17, 41 sind im Durchmesser geringer als eine Mantelfläche des Bauzylinders 22 ausgebildet. Das Aufbaumaterial 23 kann in einen Zwischenraum zwischen den Substratplatten 17, 41 und der Mantelfläche des Bauzylinders 22 gelangen. Dadurch kann eine zusätzliche Sicherung gegen Verschieben der Substratplatten 17, 41 gegeneinander innerhalb des Bauzylinders 22 erfolgen.

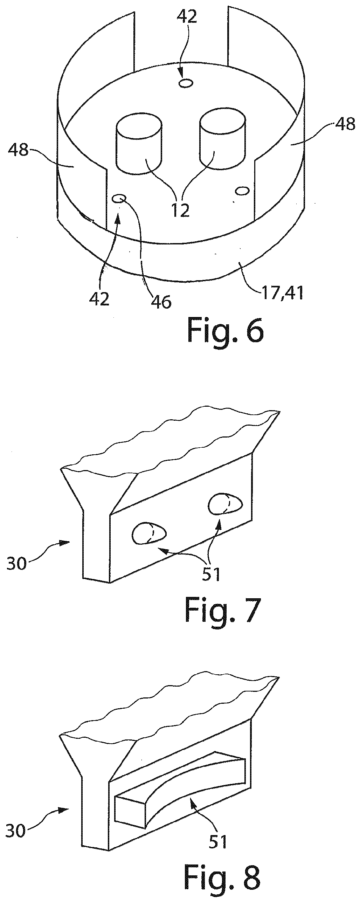

In Figur 6 ist eine perspektivische Ansicht einer Substratplatte 17, 41 mit zumindest einem darauf aufgebauten Bauteil 12 dargestellt, bei welchem zusätzlich zumindest ein Stützelement 48 vorgesehen ist. Dieses Stützelement 48 ist in der Höhe gleich oder vorzugsweise höher als das höchste auf der Substratplatte 17, 41 aufgebaute Bauteil 12. Bevorzugt können mehrere Stützelemente 48 vorgesehen sein. Diese können säulenförmig oder, wie in Figur 6 dargestellt, auch als Wandelemente ausgebildet sein. Diese Stützelemente 48 haben eine Schutzfunktion. Beim Überführen der Substratplatte 17, 41 aus dem Bauzylinder 22 in die Auffangkammer 19 werden die Substratplatten 17, 41 übereinandergestapelt. Das zumindest eine Stützelement 48 hält die darüber liegende Substratplatte 17, 41 auf Abstand zur darunterliegenden Substratplatte 17, 41, auf der das zumindest eine Stützelement 48 aufgebaut ist, so dass die darauf aufgebauten Bauteile 12 nicht beschädigt werden.

Bevorzugt können die Stützelemente 48 als äußere Schutzwände segmentförmig ausgebildet sein.

In Figur 7 ist eine perspektivische Ansicht der Auftragsvorrichtung 30 dargestellt. An einer Stirnseite der Auftragsvorrichtung 30 ist zumindest ein Führungselement 51 vorgesehen. Dieses Führungselement 51 greift außerhalb einer Mittelachse an der Substratplatte 17, 41 an und ermöglicht eine geradlinige Verschiebebewegung entlang der X-Achse. Dadurch kann die Substratplatte 17, 41 gesichert in die Auffangkammern 19 oder das Magazin übergeführt werden. Beispielsweise sind gemäß Figur 2 Vorsprünge als Führungselemente 51 vorgesehen. Diese können aus einem elastischen Material ausgebildet sein, so dass diese zusätzlich als eine Art Pufferelement dienen.

In Figur 8 ist eine alternative Ausführungsform des zumindest einen Führungselementes 51 zu Figur 5 dargestellt. Dieses Führungselement 51 kann beispielsweise eine konkave Vertiefung aufweisen, um an einen Außenumfang der Substratplatte 17, 41 anzugreifen.

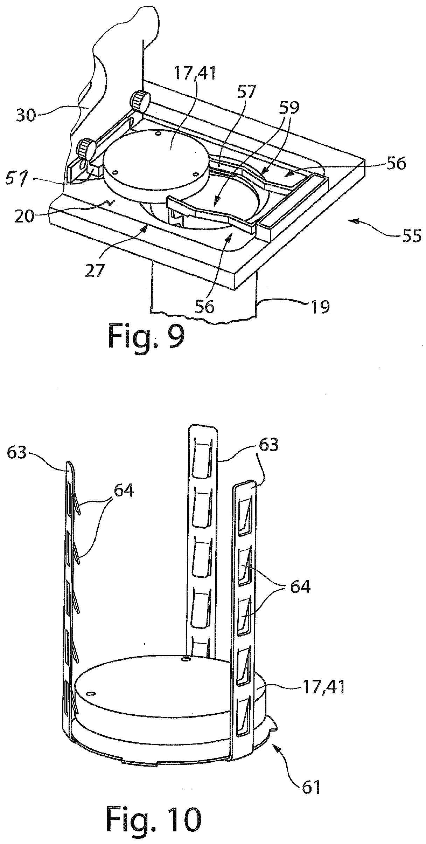

In Figur 9 ist eine perspektivische Ansicht auf eine in der Arbeitsebene 20 liegende Öffnung 27 der Auffangkammer 19 dargestellt. Dieser Öffnung 27 der Auffangkammer 19 ist eine Einführvorrichtung 55 zugeordnet. Diese Einführvorrichtung 55 umfasst bevorzugt zwei Führungsarme 56, welche sich entgegen der Verfahrrichtung erstrecken, durch welche die Substratplatte 17, 41 von dem Bauzylinder 22 in die Auffangkammer 19 verfahren wird. Die Führungsarme 33 weisen im Einführbereich der Einführvorrichtung 55 Auflageflächen 57 auf, die aufeinander zugerichtet sind. Im Einführbereich der Einführvorrichtung 55 sind die Führungsarme 56 derart zueinander beabstandet, dass eine Substratplatte 17, 41 zwischen die Führungsarme 56 verfahrbar ist oder die Führungsarme 56 durch die Substratplatte 17, 41 aufgeweitet werden. Beim Überführen der Substratplatte 17, 41 in die Einführvorrichtung untergreifen die Auflagefläche 57 die Substratplatte 17, 41, so dass diese oberhalb der Öffnung 27 horizontal ausgerichtet positionierbar ist. Die Führungsarme 56 liegen vorzugsweise mit geringer Spannung an einem Außenumfang der Substratplatte 17 an. Kurz bevor die Substratplatte 17, 41 vollständig über der Öffnung 27 der Auffangkammer 19 positioniert ist, werden Spreizabschnitte 79 an den Führungsarmen 56 durch einen Außenumfang der Substratplatte 17, 41 betätigt. Die Führungsarme 56 werden aufgeweitet. Die Auflageflächen 57 der Führungsarme 56 geben die Substratplatte 17, 41 frei. Die Substratplatte 17, 41 mit dem zumindest einen Bauteil 12 fällt in die Auffangkammer 19.

Zur Dämpfung der Fallbewegung der Substratplatte 17, 41 ist eine Aufpralldämpfungsvorrichtung 61 vorgesehen. Eine Ausführungsform dieser Aufpralldämpfungsvorrichtung 61 ist perspektivisch in Figur 10 dargestellt.

Diese Aufpralldämpfungsvorrichtung 61 kann in die Auffangkammer 19 einsetzbar sein. Bevorzugt weist diese einen Boden auf, von welchem aus sich in vertikaler Richtung Streben oder Leisten 63 erstrecken. Entlang diesen Leisten 63 sind mehrere Dämpfungselemente 64 beispielsweise in Form von Laschen ausgebildet, welche zur in den Innenraum der Auffangkammer 19 hervorstehen. Die Dämpfungselemente 64 und mehreren Leisten 63 sind bevorzugt in gleicher Höhe zueinander ausgerichtet. Dadurch kann die Substratplatte 17, 41 horizontal ausgerichtet innerhalb der Aufbaukammer 19 nach unten fallen.

Alternativ kann vorgesehen sein, dass die Aufpralldämpfungseinrichtung 61 in eine Umfangswand der Auffangkammer 19 integriert ist oder daran befestigt ist.

## Patentansprüche

1. Verfahren zum Herstellen von dreidimensionalen Bauteilen (12) durch selektives Verfestigen aus schichtweise aufgebrachtem Aufbaumaterial,
- bei dem in einer Prozesskammer (16) ein Bauzylinder (22) vorgesehen ist, in welchem eine Substratplatte ist oder mehrere Substratplatten (17, 41) übereinanderliegend gestapelt sind,
- bei dem in der Prozesskammer (16) auf die oberste Substratplatte (17) das Aufbaumaterial mit einer Auftragsvorrichtung (30) aufgebracht wird,
- bei dem mit einer Strahlquelle (15) zumindest ein Strahl (25) erzeugt und mit zumindest einem Strahlführungselement (18) auf die aufgebrachte Schicht des Aufbaumaterials zum Verfestigen des Aufbaumaterials gerichtet wird,
- bei dem die Auftragsvorrichtung (30) entlang einer Arbeitsebene (20) innerhalb der Prozesskammer (16) zumindest entlang des Bauzylinders (22) und zumindest einer benachbart dazu angeordneten Auffangkammer (19) für nicht verfestigtes Aufbaumaterial verfahren wird,
- bei dem nach dem Fertigstellen des zumindest einen Bauteils (12) die Substratplatte (17) gegenüber dem Bauzylinder (22) ausgefahren wird, sodass eine Unterseite der Substratplatte (17) in der Arbeitsebene (20) liegt,
**dadurch gekennzeichnet,**
- **dass** die aus dem Bauzylinder (22) ausgefahrene Substratplatte (17) mit dem zumindest einen sich darauf befindenden Bauteil (12) durch die Auftragsvorrichtung (30) von dem Bauzylinder (22) in die benachbarte Auffangkammer (19) oder in ein Magazin übergeführt wird.

2. Verfahren nach Anspruch 1, **dadurch gekennzeichnet, dass** die Verfahrbewegung der Auftragsvorrichtung (30) mit einer Kraft angetrieben wird, welche größer als eine Haltekraft einer lösbaren Halteeinrichtung (42) zwischen zwei übereinander gestapelten Substratplatten (17, 41) im Bauzylinder (22) ist.

3. Verfahren nach Anspruch 1 oder 2, **dadurch gekennzeichnet, dass** an der Auftragsvorrichtung (30) zumindest ein Führungselement (51) vorgesehen ist, welches an der Substratplatte (17, 41) angreift und die Substratplatte (17, 41) durch das zumindest eine Führungselement (51) entlang der Verfahrrichtung der Auftragsvorrichtung (30) geführt wird.

4. Verfahren nach einem der vorhergehenden Ansprüche, **dadurch gekennzeichnet, dass** auf die Substratplatte (17, 41) benachbart zum zumindest einen darauf aufgebauten Bauteil (12) zumindest ein Stützelement (48) aufgebaut wird, welches oder welche die Höhe des höchsten Bauteils (12) aufweist oder höher aufgebaut werden, so dass die in die Auffangkammer (19) übergeführten Substratplatten (17, 41) durch das oder die Stützelemente (48) übereinanderliegend gestapelt werden.

5. Verfahren nach einem der vorhergehenden Ansprüche, **dadurch gekennzeichnet, dass** vor dem Überführen der Substratplatte (17, 41) mit dem zumindest einen fertiggestellten dreidimensionalen Bauteil (12) in ein Magazin Überfahrelemente in der Auffangkammer (19) positioniert werden.

6. Vorrichtung zur Herstellung von dreidimensionalen Bauteilen (12) durch selektives Verfestigen aus schichtweise aufgebrachtem Aufbaumaterial, - mit einer Prozesskammer (16),
- mit einem einer Arbeitsebene (20) in der Prozesskammer (16) zugeordneten Bauzylinder (22), in welchem eine oder mehrere Substratplatten (17, 41) zur Arbeitsebene (20) verfahrbar sind,
- mit einer Auftragsvorrichtung (30), welche entlang der Arbeitsebene (20) verfahrbar ist und Aufbaumaterial auf die Substratplatte (17, 41) im Bauzylinder (22) aufbringt und nicht verfestigtes Aufbaumaterial in zumindest eine benachbart dazu angeordnete Auffangkammer (19) überführt,
- mit einer Strahlquelle (15), welche einen Strahl (25) erzeugt, der mit zumindest einem Strahlführungselement (18) auf die aufgebrachte Schicht gerichtet ist, wobei nach dem Fertigstellen des zumindest einen Bauteils (12) auf der Substratplatte (17, 41) diese gegenüber dem Bauzylinder (22) verfahrbar ist, so dass eine Unterseite der obersten Substratplatte (17, 41) in der Arbeitsebene (20) liegt,
**dadurch gekennzeichnet,**
- **dass** die Auftragsvorrichtung (30) zu einem Substratplattentransport ansteuerbar ist, durch welche die oberste aus dem Bauzylinder (22) herausgeführte Substratplatte (17, 41) in die Auffangkammer (19) oder in ein Magazin verschiebbar ist.

7. Vorrichtung nach Anspruch 6, **dadurch gekennzeichnet, dass** die Auftragsvorrichtung (30) zumindest ein Führungselement (51) aufweist, durch welches die Substratplatte (17, 41) während der Verschiebebewegung entlang der Arbeitsebene (20) geführt ist.

8. Vorrichtung nach Anspruch 7, **dadurch gekennzeichnet, dass** das zumindest eine Führungselement (51) durch zwei zueinander beabstandete Vorsprünge oder einen Anschlag mit einer konkaven Vertiefung ausgebildet ist.

9. Vorrichtung nach Anspruch 7 oder 8, **dadurch gekennzeichnet, dass** das zumindest eine Führungselement (51) aus einem elastischen Material hergestellt ist.

10. Vorrichtung nach Anspruch 6, **dadurch gekennzeichnet, dass** zwischen zwei Substratplatten (17, 41) eine lösbare Haltevorrichtung (42) vorgesehen ist.

11. Vorrichtung nach Anspruch 6, **dadurch gekennzeichnet, dass** Überfahrelemente in die Auffangkammer (19) einsetzbar sind.

12. Vorrichtung nach einem der Ansprüche 6 bis 11, **dadurch gekennzeichnet, dass** einer in der Arbeitsebene (20) liegenden Öffnung (27) der Auffangkammer (19) eine Einführvorrichtung (55) zugeordnet ist, wobei die Einführvorrichtung (55) bevorzugt Führungsarme (56) aufweist, welche sich teilweise entlang der Öffnung (27) der Auffangkammer (19) erstrecken, wobei die Führungsarme (56) im Einführbereich zur Öffnung (27) der Auffangkammer (19) Auflageflächen (61) aufweist, welche die Substratplatte (17, 41) über der Öffnung (27) aufnehmen.

13. Vorrichtung nach Anspruch 12, **dadurch gekennzeichnet, dass** in der Verfahrrichtung der Auftragsvorrichtung (30) den Auflageflächen (57) nachfolgend an den Führungsarmen (56) Spreizabschnitte (59) vorgesehen sind, welche durch eine Verschiebebewegung der Substratplatte (17, 41) aufspreizbar sind, so dass die Substratplatte (17, 41) von den Auflageflächen (57) freikommt und in die Auffangkammer (19) fällt.

14. Vorrichtung nach einem der Ansprüche 6 bis 13, **dadurch gekennzeichnet, dass** eine Aufpralldämpfungsvorrichtung (61) in die Auffangkammer (19) einsetzbar oder an der Mantelfläche der Auffangkammer (19) vorgesehen ist.

15. Vorrichtung nach Anspruch 14, **dadurch gekennzeichnet, dass** die Aufpralldämpfungsvorrichtung (61) entlang der Höhe der Auffangkammer (19) mehrere Dämpfungselemente (64) aufweist, durch welche eine Fallbewegung der Substratplatte (17, 41) in die Auffangkammer (19) gebremst ist.

## Claims

1. A method for producing three-dimensional components (12) by selective solidification from build-up material that is deposited layer by layer,
- in which a construction cylinder (22), in which one or more substrate plates (17, 41) are stacked one above the other, is provided in a process chamber (16),
- in which the build-up material is deposited in the process chamber (16) to the uppermost substrate plate (17) by an application device (30),
- in which at least one beam (25) is generated by a beam source (15) and is directed by at least one beam guiding element (18) onto the deposited layer of the build-up material for solidification of the build-up material,
- in which the application device (30) is moved along a working plane (20) within the process chamber (16) at least along the construction cylinder (22) and at least one collecting chamber (19), arranged adjacently thereto, for non-solidified build-up material,
- in which, after completion of the at least one component (12), the substrate plate (17) is extended relative to the construction cylinder (22) so that a lower face of the substrate plate (17) lies in the working plane (20),
**characterised in that**
- the substrate plate (17) that is extended out of the construction cylinder (22) is transferred, together with the at least one component (12) located thereon, by the application device (30) from the construction cylinder (22) into the adjacent collecting chamber (19) or into a magazine.

2. The method according to claim 1, **characterised in that** the displacement movement of the application device (30) is driven with a force that is greater than a holding force of a detachable holding device (42) between two substrate plates (17, 41) stacked one above the other in the construction cylinder (22).

3. The method according to claim 1 or 2, **characterised in that** at least one guide element (51) is provided on the application device (30) that engages the substrate plate (17, 41), and the substrate plate (17, 41) is guided by the at least one guide element (51) along the direction of travel of the application device (30).

4. The method according to any one of the preceding claims, **characterised in that** at least one support element (48) is built on the substrate plate (17, 41) adjacent to the at least one component (12) built thereon, which support element has the same height as the highest component (12) or higher, so that the substrate plates (17, 41) transferred into the collecting chamber (19) are stacked one above the other by the support element(s) (48).

5. The method according to any one of the preceding claims, **characterised in that**, before transferring the substrate plate (17, 41) with the at least one finished three-dimensional component (12) into a magazine, transfer elements are positioned in the collecting chamber (19).

6. A device for producing three-dimensional components (12) by selective solidification from build-up material that is deposited layer by layer, - having a process chamber (16),
- having a construction cylinder (22) assigned to a working plane (20) in the process chamber (16), in which one or more substrate plates (17, 41) can be moved to the working plane (20),
- having an application device (30) that can be moved along the working plane (20) and applies building material to the substrate plate (17, 41) in the construction cylinder (22) and transfers unsolidified building material into at least one collecting chamber (19) arranged adjacent thereto,
- having a beam source (15) that generates a beam (25) that is directed with at least one beam guiding element (18) onto the deposited layer, wherein after the completion of the at least one component (12) on the substrate plate (17, 41) this can be moved relative to the construction cylinder (22) so that an underside of the uppermost substrate plate (17, 41) lies in the working plane (20),
**characterised in that**
- the application device (30) can be actuated to transport the substrate plate, by means of which the uppermost substrate plate (17, 41) guided out of the construction cylinder (22) can be displaced into the collecting chamber (19) or into a magazine.

7. The device according to claim 6, **characterised in that** the application device (30) has at least one guide element (51) through which the substrate plate (17, 41) is guided during the displacement movement along the working plane (20).

8. The device according to claim 7, **characterised in that** the at least one guide element (51) is formed by two mutually spaced apart projections or a stop with a concave depression.

9. The device according to claim 7 or 8, **characterised in that** the at least one guide element (51) is made of an elastic material.

10. The device according to claim 6, **characterised in that** a detachable holding device (42) is provided between two substrate plates (17, 41).

11. The device according to claim 6, **characterised in that** overrunning elements can be inserted into the collecting chamber (19).

12. The device according to any one of claims 6 to 11, **characterised in that** an insertion device (55) is assigned to an opening (27) in the working plane (20) in the collecting chamber (19), wherein the insertion device (55) preferably has guide arms (56) that extend partially along the opening (27) of the collecting chamber (19), wherein the guide arms (56) have bearing surfaces (61) in the insertion region towards the opening (27) of the collecting chamber (19), which bearing surfaces receive the substrate plate (17, 41) above the opening (27).

13. The device according to claim 12, **characterised in that** spreading sections (59) are provided on the guide arms (56) downstream of the bearing surfaces (57) in the direction of travel of the application device (30), which sections can be spread open by a displacement movement of the substrate plate (17, 41) so that the substrate plate (17, 41) comes free from the bearing surfaces (57) and falls into the collecting chamber (19).

14. The device according to any one of claims 6 to 13, **characterised in that** an impact damping device (61) can be inserted into the collecting chamber (19) or is provided on the lateral surface of the collecting chamber (19).

15. The device according to claim 14, **characterised in that** the impact damping device (61) has multiple damping elements (64) along the height of the collecting chamber (19), by means of which a falling movement of the substrate plate (17, 41) into the collecting chamber (19) is braked.

## Revendications

1. Procédé de fabrication de composants (12) tridimensionnels par consolidation sélective d'un matériau de construction appliqué en couches,
- selon lequel un cylindre de construction (22) est situé dans une chambre de traitement (16), dans lequel se situe une plaque de substrat ou sont empilées les unes sur les autres plusieurs plaques de substrat (17, 41),
- selon lequel, dans la chambre de traitement (16), le matériau de construction est appliqué sur la plaque de substrat (17) supérieure à l'aide d'un dispositif applicateur (30),
- selon lequel au moins un faisceau (25) est généré à l'aide d'une source de faisceau (15) et dirigé, à l'aide d'au moins un élément de guidage de faisceau (18), sur la couche de matériau de construction appliquée pour consolider le matériau de construction,
- selon lequel le dispositif applicateur (30) est déplacé le long d'un plan de travail (20) à l'intérieur de la chambre de traitement (16) au moins le long du cylindre de construction (22) et d'au moins une chambre collectrice (19) agencée à côté de celui-ci pour le matériau de construction non consolidé,
- selon lequel, après l'achèvement de l'au moins un composant (12), la plaque de substrat (17) est sortie par rapport au cylindre de construction (22) de façon qu'une face inférieure de la plaque de substrat (17) se situe dans le plan de travail (20),
**caractérisé en ce que**
- la plaque de substrat (17) sortie du cylindre de construction (22) est transférée, avec l'au moins un composant (12) situé sur celle-ci, par le dispositif applicateur (30) du cylindre de construction (22) dans la chambre collectrice (19) adjacente ou dans un magasin.

2. Procédé selon la revendication 1, **caractérisé en ce que** le déplacement du dispositif applicateur (30) est entraîné avec une force, laquelle est supérieure à une force de maintien d'un dispositif de maintien (42) amovible entre deux plaques de substrat (17, 41) empilées l'une sur l'autre dans le cylindre de construction (22).

3. Procédé selon la revendication 1 ou 2, **caractérisé en ce que**, sur le dispositif applicateur (30), au moins un élément de guidage (51) est prévu, lequel vient en prise avec la plaque de substrat (17, 41) et la plaque de substrat (17, 41) est guidée par l'au moins un élément de guidage (51) le long de la direction de déplacement du dispositif applicateur (30).

4. Procédé selon l'une quelconque des revendications précédentes, **caractérisé en ce que**, sur la plaque de substrat (17, 41), au moins un élément support (48) est construit adjacent à l'au moins un composant (12) construit sur celle-ci, lequel ou lesquels présente(nt) la hauteur du composant (12) le plus haut ou est/sont construit(s) plus haut de façon que les plaques de substrat (17, 41) transférées dans la chambre collectrice (19) soient empilées les unes sur les autres par l'au moins un élément support (48).

5. Procédé selon l'une quelconque des revendications précédentes, **caractérisé en ce qu'**avant le transfert de la plaque de substrat (17, 41) avec l'au moins un composant (12) tridimensionnel fini dans un magasin, des éléments de transfert sont positionnés dans la chambre collectrice (19).

6. Dispositif de fabrication de composants (12) tridimensionnels par consolidation sélective d'un matériau de construction appliqué en couches, comprenant une chambre de traitement (16),
- un cylindre de construction (22) associé à un plan de travail (20) dans la chambre de traitement (16), dans lequel une ou plusieurs plaques de substrat (17, 41) peuvent être déplacées vers le plan de travail (20),
- un dispositif applicateur (30), lequel peut être déplacé le long du plan de travail (20) et applique le matériau de construction sur la plaque de substrat (17, 41) dans le cylindre de construction (22) et transfère le matériau de construction non consolidé dans au moins une chambre collectrice (19) disposée à côté de celui-ci,
- une source de faisceau (15), laquelle génère un faisceau (25) qui est dirigé à l'aide d'au moins un élément de guidage de faisceau (18) sur la couche appliquée, après l'achèvement de l'au moins un composant (12) sur la plaque de substrat (17, 41) celle-ci pouvant être déplacée par rapport au cylindre de construction (22), de façon qu'une face inférieure de la plaque de substrat (17, 41) supérieure se trouve dans le plan de travail (20),
**caractérisé en ce que**
- le dispositif applicateur (30) peut être commandé pour transporter les plaques de substrat, au moyen duquel la plaque de substrat (17, 41) supérieure sortie du cylindre de construction (22) peut être déplacée dans la chambre collectrice (19) ou dans un magasin.

7. Dispositif selon la revendication 6, **caractérisé en ce que** le dispositif applicateur (30) comporte au moins un élément de guidage (51) au moyen duquel la plaque de substrat (17, 41) est guidée lors du mouvement de translation le long du plan de travail (20).

8. Dispositif selon la revendication 7, **caractérisé en ce que** l'au moins un élément de guidage (51) est formé par deux saillies espacées l'une de l'autre ou une butée comportant une cavité concave.

9. Dispositif selon la revendication 7 ou 8, **caractérisé en ce que** l'au moins un élément de guidage (51) est fabriqué en un matériau élastique.

10. Dispositif selon la revendication 6, **caractérisé en ce que**, entre deux plaques de substrat (17, 41), un dispositif de maintien (42) amovible est prévu.

11. Dispositif selon la revendication 6, **caractérisé en ce que** des éléments de transfert peuvent être insérés dans la chambre collectrice (19).

12. Dispositif selon l'une quelconque des revendications 6 à 11, **caractérisé en ce qu'**un dispositif d'insertion (55) est associé à une ouverture (27) se situant dans le plan de travail (20) de la chambre collectrice (19), le dispositif d'insertion (55) comportant de préférence des bras de guidage (56) qui s'étendent partiellement le long de l'ouverture (27) de la chambre collectrice (19), dans lequel les bras de guidage (56) comportant des surfaces d'appui (61) dans la zone d'insertion vers l'ouverture (27) de la chambre collectrice (19), lesquelles reçoivent la plaque de substrat (17, 41) à travers l'ouverture (27).

13. Dispositif selon la revendication 12, **caractérisé en ce que**, dans la direction de déplacement du dispositif applicateur (30) à la suite des surfaces d'appui (57), sur les bras de guidage (56), sont prévues des sections d'écartement (59) qui peuvent être écartées par un mouvement de translation de la plaque de substrat (17, 41) de façon que la plaque de substrat (17, 41) soit libérée des surfaces d'appui (57) et tombe dans la chambre collectrice (19).

14. Dispositif selon l'une quelconque des revendications 6 à 13, **caractérisé en ce qu'**un dispositif d'amortissement des chocs (61) peut être inséré dans la chambre collectrice (19) ou est prévu sur la surface latérale de la chambre collectrice (19).

15. Dispositif selon la revendication 14, **caractérisé en ce que** le dispositif d'amortissement des chocs (61) comporte une pluralité d'éléments d'amortissement (64) le long de la hauteur de la chambre collectrice (19), au moyen desquels un mouvement de chute de la plaque de substrat (17, 41) dans la chambre collectrice (19) est freiné.
